Europäisches Patentamt

European Patent Office

Office européen des brevets

(11) Veröffentlichungsnummer: **0 492 238 A1**

# EUROPÄISCHE PATENTANMELDUNG

(21) Anmeldenummer: **91121047.4**

(51) Int. Cl.⁵: **C09C 3/04**, B02C 4/32

(22) Anmeldetag: **09.12.91**

(30) Priorität: **21.12.90 DE 4041137**

(43) Veröffentlichungstag der Anmeldung:
**01.07.92 Patentblatt 92/27**

(84) Benannte Vertragsstaaten:
**BE DE ES FR GB IT NL**

(71) Anmelder: **BAYER AG**

**W-5090 Leverkusen 1 Bayerwerk(DE)**

(72) Erfinder: **Kröckert, Bernd, Dr.**
**Brauerstrasse 14**
**W-4230 Wesel(DE)**
Erfinder: **Linde, Günter, Dr.**
**Deswatinesstrasse 95**
**W-4150 Krefeld(DE)**
Erfinder: **Holle, Bernd-Michael, Dr.**
**Bethelstrasse 52**
**W-4150 Krefeld(DE)**

(54) **Verfahren zur Mahlung von Pigmenten.**

(57) Die vorliegende Erfindung betrifft ein Verfahren zur Mahlung von anorganischen Pigmenten, wobei die Mahlung zwischen sich drehenden Walzen erfolgt, zwischen denen während der Mahlung eine konstante und definierte Linienkraft vorliegt

EP 0 492 238 A1

Die vorliegende Erfindung betrifft ein Verfahren zur Trockenmahlung von anorganischen Pigmenten.

Bei der Herstellung von Pigmenten sind Mahlschritte zwangsläufig notwendig, um zu wettbewerbsfähigen Produkten zu gelangen. So ist es üblich, bei der Herstellung von $TiO_2$- oder Eisenoxidpigmenten die entsprechenden Trockenprodukte in Hammer-, Stift-, Schlagkreuz-, Pendel- oder Dampfstrahlmühlen zu mahlen (Ullmanns Encyclopädie der technischen Chemie, 4. neubearbeitete und erweiterte Auflage, Band 18, Seiten 576 und 601).

Jede dieser Mühlen weist jedoch Nachteile auf, So sind Schlagkreuz- oder Stiftmühlen nur geeignet, um Agglomerate zu zerteilen. Harte Aggregate schädigen die Mühle und/oder verlassen diese, ohne aufgemahlen worden zu sein.

Hammer- und Pendelmühlen sind sehr große und aufwendige Aggregate, in denen ein gleichmäßiges Aufmahlen aller Teilchen auch nicht stets gewährleistet ist.

Strahlmühlen bieten zwar viele Vorteile, sie sind jedoch bezogen auf die Menge des zu mahlenden Produktes sehr teure Mahlaggregate.

Aufgabe dieser Erfindung ist es somit, ein Verfahren zur Mahlung von anorganischen Pigmenten zur Verfügung zu stellen, welches die vorgenannten Nachteile nicht aufweist.

Überraschenderweise wurde nun gefunden, daß die Mahlung von anorganischen Pigmenten besonders gut dadurch durchgeführt werden kann, daß die Mahlung zwischen sich drehenden Walzen erfolgt, zwischen denen während der Mahlung eine konstante und definierte Preßkraft vorliegt. Ein solches Verfahren ist Gegenstand dieser Erfindung. Es ist als überraschend anzusehen, daß für die Durchführung des erfindungsgemäßen Verfahrens geeignete Geräte üblicherweise als Verdichter bekannt sind, z.B. Alexanderwerk oder Bepex-Verdichter. In diesen Vorrichtungen werden die zu behandelnden Materialien verdichtet, wobei man mehr oder weniger große Agglomerate erhält, die oft auch als Schülpen bezeichnet werden.

Beim Einsatz entsprechender Schülpen aus anorganischen Pigmenten werden jedoch überraschenderweise Farbwerte erzielt, die sonst nur an anorganischen Pigmenten gemessen werden, die in den eingangs beschriebenen Mühlen aufgemahlen wurden. Dies bedeutet, daß die Kombination aus einem Walzenpaar, zwischen dem eine definierte und konstante Preßkraft herrscht, und einer üblichen Desagglomerationsmühle in ökonomischer Weise zu verkaufsfähigen anorganischen Pigmenten führt. Darüber hinaus ergibt sich für diese anorganischen Pigmente eine verbesserte Pigmentqualität. Besonders gute Ergebnisse werden dabei erzielt, wenn die Linienkraft (Preßkraft pro Längeneinheit) zwischen den Walzen 3 und 100 KN/cm, vorzugsweise zwischen 5 und 60 KN/cm, beträgt. Die Walzen können vorteilhaft entweder mit gleichen oder ungleichen Drehzahlen laufen.

Besonders gute Ergebnisse werden weiterhin dann erzielt, wenn der Spalt zwischen den Walzen während der Mahlung zwischen 0,5 und 10 mm beträgt. Vorteilhaft ist es darüber hinaus, nach der Walzenmahlung eine Desagglomeration der anorganischen Pigmente vorzunehmen.

Üblicherweise ist es ausreichend, wenn die Oberflächen der Walzen glatt sind, Jedoch kann es von Vorteil sein, wenn die Oberflächen der Walzen mit einem Profil ausgerüstet sind.

Das erfindungsgemäße Verfahren ist grundsätzlich für die Mahlung aller bekannten anorganischen Pigmente vorteilhaft durchführbar. In einer besonders bevorzugten Ausführungsform des erfindungsgemäßen Verfahrens sind die anorganischen Pigmente Eisenoxide, Titandioxide oder Chromoxide.

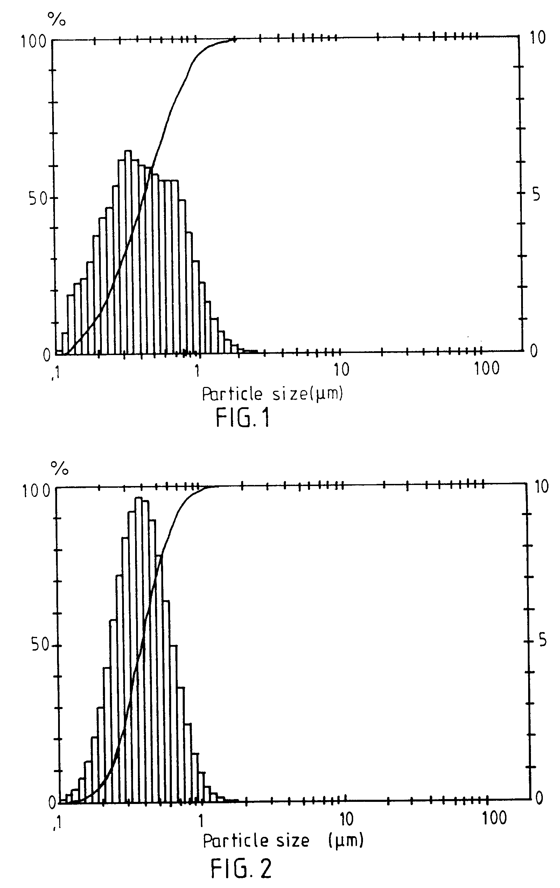

Die verbesserte Pigmentqualität der nach dem erfindungsgemäßen Verfahren erhaltenen Pigmente zeigt sich in ihrer gleichförmigen Teilchengrößenverteilung. In Fig. 1 ist der Vergleich von nach üblichen Verfahren gemahlenem Titandioxid (1.) und Titandioxid, das nach dem erfindungsgemäßen Verfahren aufgemahlen wurde (2.), dargestellt.

Die Bestimmung der Teilchenverteilung erfolgt nach Ullmann's Encyclopedia of Industrial Chemistry Fith, Completley Revised Edition, Volume B 2 Unit Operations I, Kurt Leschonski 2. Particle Size Analysis and Charakterisation of a Classification Process (S. 2-30).

Die Bestimmung der Farbtöne erfolgte nach DIN 6174 (äquivalent ISO DIN 7724, 1-3 drafts). Das Aufhellvermögen wurde bestimmt nach DIN 55 982.

Im weiteren werden einige Beispiele angegeben, ohne daß dies eine Beschränkung bedeuten soll.


Beispiel 1

Mahlung von Material für Bayferrox® 130, Handelsprodukt der Bayer AG. Aus der üblichen Mahlung erhält man Material mit Helligkeit $L^* = 0$, Rotanteil $a^* = 0$ und Gelbanteil $b^* = 0$.

1.1 Mahlung des gleichen Ausgangsmaterials zwischen zwei Walzen mit einer Lienienkraft von konstant 15 KN/cm führt zu
$L^* = 0,2$; $a^* = 0,0$; $b^* = 0,3$

1.2 Bei 28 KN/cm Linienkraft

$L^* = 0,4$; $a^* = 0,1$; $b^* = 0,5$

Hieraus ergibt sich, daß mit beiden Mahlungen das Handelsprodukt nachgestellt werden kann. Der positive Beitrag an Helligkeit und Gelbanteil zeigt das Verbesserungspotential an.

Beispiel 2

Mahlung von geglühtem $TiO_2$ aus dem Sulfatverfahren.

2.1 Linienkraft 17 KN/cm

2.2 Linienkraft 25 KN/cm

2.3 Linienkraft 28 KN/cm

| | Purton | | Aufhellung PKV = 0,5 % | |
|---|---|---|---|---|
| | $R_y$ | $R_x$-$R_z$ | AV | $R_z$-$R_x$ |
| Vergleichsmaterial | 93,0 | 2,9 | 100 | 3,2 |
| 2.1 | 93,0 | 2,4 | 107 | 3,6 |
| 2.2 | 92,9 | 2,4 | 106 | 3,8 |
| 2.3 | 92,9 | 2,4 | 110 | 3,6 |

Die geringen Werte bei $R_x$-$R_z$ zeigen, daß weniger Verunreinigungen ins Pigment gelangen. Die erhöhten Werte im AV und $R_z$-$R_x$ zeigen an, daß die Teilchenverteilung günstiger ist und der Anwender weniger Pigment benötigt, um das gleiche Farbergebnis zu erreichen.

**Patentansprüche**

1. Verfahren zur Mahlung von anorganischen Pigmenten, dadurch gekennzeichnet, daß die Mahlung zwischen sich drehenden Walzen erfolgt, zwischen denen während der Mahlung eine konstante und definierte Linienkraft vorliegt.

2. Verfahren gemäß Anspruch 1, dadurch gekennzeichnet, daß die Linienkraft zwischen 3 und 100 KN/cm, vorzugsweise zwischen 5 und 60 KN/cm, beträgt.

3. Verfahren gemäß einem der Ansprüche 1 oder 2, dadurch gekennzeichnet, daß die Walzen mit gleichen Drehzahlen laufen.

4. Verfahren gemäß einem der Ansprüche 1 oder 2, dadurch gekennzeichnet, daß die Walzen mit ungleichen Drehzahlen laufen.

5. Verfahren gemäß einem oder mehreren der Ansprüche 1 bis 4, dadurch gekennzeichnet, daß der Spalt zwischen den Walzen während der Mahlung zwischen 0,5 und 10 mm beträgt.

6. Verfahren gemäß einem oder mehreren der Ansprüche 1 bis 5, dadurch gekennzeichnet, daß nach der Walzenmahlung eine Desagglomeration vorgenommen wird.

7. Verfahren gemäß einem oder mehreren der Ansprüche 1 bis 6, dadurch gekennzeichnet, daß die Oberflächen der Walzen glatt sind.

8. Verfahren gemäß einem oder mehreren der Ansprüche 1 bis 6, dadurch gekennzeichnet, daß die Oberflächen der Walzen mit einem Profil ausgerüstet sind.

9. Verfahren gemäß einem oder mehreren der Ansprüche 1 bis 8, dadurch gekennzeichnet, daß die anorganischen Pigmente Eisenoxide, Titandioxide oder Chromoxide sind.

FIG. 1

FIG. 2

## EINSCHLÄGIGE DOKUMENTE

EP 91121047.4

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| X | ZEMENT-KALK-GIPS, 40. Jahrgang, Nr. 12, 1987, Bauverlag Ges. mbH), Wiesbaden, H. PAULSEN "Erste Betriebsergebnisse beim Einsatz einer Rollenpresse zur Kalkmahlung" Seiten 598-601 * Seite 598, Absatz 2 "Beschreibung der Anlage"; Seite 600, Bild 4 *<br>-- | 1,2,5, 7 | C 09 C 3/04<br>B 02 C 4/32 |
| A | CH - A - 620 840 (GEBRÜDER BÜHLER AG) * Patentansprüche *<br>---- | 1-7 | |

| RECHERCHIERTE SACHGEBIETE (Int. Cl.⁵) |
|---|
| C 09 C<br>B 02 C |

Der vorliegende Recherchenbericht wurde für alle Patentansprüche erstellt.

| Recherchenort | Abschlußdatum der Recherche | Prüfer |
|---|---|---|
| WIEN | 27-03-1992 | HAUSWIRTH |